# EUROPEAN PATENT SPECIFICATION

(11) **EP 4 612 467 B1**
(45) Date of publication and mention of the grant of the patent: **29.07.2026**
(21) Application number: 22817968.5
(22) Date of filing: 15.11.2022
(51) Int. Cl.: G01J 3/42, H01Q 15/00, H01S 3/10, H01Q 1/00, G01J 3/10, H01Q 13/08, H01Q 1/38

(54) **PHOTOCONDUCTIVE ANTENNA ASSEMBLY FOR GENERATING THZ RADIATION**
PHOTOLEITENDE ANTENNENANORDNUNG ZUR ERZEUGUNG VON THZ-STRAHLUNG
ENSEMBLE ANTENNE PHOTOCONDUCTRICE POUR LA GÉNÉRATION D'UN RAYONNEMENT THZ

(43) Date of publication of application: 10.09.2025
(73) Proprietor: Huawei Technologies Co., Ltd., Shenzhen, Guangdong 518129 (CN)
(72) Inventor: JAFARGHOLI, Amir, Guildford Surrey GU2 7XH (GB); TAFAZOLLI, Rahim, Guildford Surrey GU2 7XH (GB)
(74) Representative: Pfenning, Meinig & Partner mbB
(86) International application number: PCT/EP2022/081946
(87) International publication number: WO 2024/104568

(56) References cited:
- US-A1- 2022 006 199
- HE YEJUN ET AL: "An overview of terahertz antennas", CHINA COMMUNICATIONS, CHINA INSTITUTE OF COMMUNICATIONS, PISCATAWAY, NJ, USA, vol. 17, no. 7, 24 July 2020 (2020-07-24), pages 124 - 165, XP011800763, ISSN: 1673-5447, [retrieved on 20200724], DOI: 10.23919/J.CC.2020.07.011
- HUSSAIN NIAMAT ET AL: "High gain metasurface antenna with multiple feeding structure", 2017 11TH INTERNATIONAL CONGRESS ON ENGINEERED MATERIALS PLATFORMS FOR NOVEL WAVE PHENOMENA (METAMATERIALS), IEEE, 27 August 2017 (2017-08-27), pages 253 - 255, XP033256352, DOI: 10.1109/METAMATERIALS.2017.8107909
- ESMAIL BASHAR A. F. ET AL: "Overview of Metamaterials-Integrated Antennas for Beam Manipulation Applications: The Two Decades of Progress", IEEE ACCESS, vol. 10, 1 January 2022 (2022-01-01), pages 67096 - 67116, XP093059460, Retrieved from the Internet <URL:https://ieeexplore.ieee.org/ielx7/6287639/9668973/09803036.pdf?tp=&arnumber=9803036&isnumber=9668973&ref=aHR0cHM6Ly9wYXRlbnRzLmdvb2dsZS5jb20v> [retrieved on 20230630], DOI: 10.1109/ACCESS.2022.3185260

## Description

### TECHNICAL FIELD

The present disclosure generally relates to antenna technology. More specifically, the present disclosure relates to a photoconductive antenna, PCA, assembly for generating THz radiation, for instance, for wireless communication as well as a method of operating such a PCA assembly.

### BACKGROUND

Terahertz (THz) waves possess several unique capabilities and properties, including ones that make them useful for wireless communication, chemical identification, material characterization, biological sensing, and medical imaging, to cite a few examples. One of the most common approaches to generating THz waves is utilizing photoconductive antennas (photoconductive antennas, PCAs), where an ultrafast femtosecond laser interacts with a biased photoconductive semiconductor with a sub-picosecond carrier lifetime (usually low-temperature-grown GaAs (low-temperature-grown GaAs, LT-GaAs)) that results in a transient photocurrent. According to radiation theory, a transient photocurrent with a sub-picosecond pulse width results in radiation of electromagnetic waves in the THz spectrum. However, despite several advantages of PCAs such as room temperature operation, compact design, and broadband radiation, PCAs suffer from a low optical-to-THz conversion efficiency, in particular in the 100 ~ 500 GHz band limiting their applications.

The optical-to-THz conversion efficiency of PCAs by nature is based on quantum effects. Several approaches have been suggested for increasing the PCA efficiency by increasing the field intensity at a feed point of PCA, for instance, by using a high impedance surface, shaping the antenna elements, or using plasmonic structures. However, these conventional approaches still have one or more of the following disadvantages: low efficiency and high losses, impedance matching issues, large electrical size, high-cost manufacturing process, and/or integration issues (especially at higher frequencies).

US 2022/006199 A1 discloses a metamaterial loaded antenna. The antenna includes a dielectric substrate, a first arm, a second arm, a feed point, and a metamaterial structure. The first arm and the second arm are placed on the dielectric substrate. The feed point includes at least one gap between the first arm and the second arm. A metamaterial structure is inserted in the feed point. The metamaterial structure includes a single negative (SNG) metamaterial.

HE YEJUN ET AL: "An overview of terahertz antennas", CHINA COMMUNICATIONS, CHINA INSTITUTE OF COMMUNICATIONS, vol.17, no.7 (2020-07-24) discloses that photoconductive antennas (PCAs) are used for the generation and detection of THz wave, and that an antenna model of the PCA basically includes an antenna gap, an electrode and a photoconductive substrate. The antenna gap is the position where the laser pulse directly illuminates the photoconductive material. The laser pulses are focused on the gap between the electrodes and absorbed by the photoconductive substrate.

### SUMMARY

It is an objective of the present disclosure to provide an improved photoconductive antenna, PCA, assembly for generating THz radiation, for instance, for wireless communication as well as a method of operating such a PCA assembly.

The foregoing and other objectives are achieved by the subject matter of the independent claims. Further implementation forms are apparent from the dependent claims, the description and the figures.

According to a first aspect a photoconductive antenna, PCA, assembly for generating THz radiation is provided. The PCA assembly comprises a dielectric semiconductor substrate and a plurality of metallic antenna elements (also referred to as metal contacts), including a first antenna element and at least a second antenna element defining an antenna cell of the PCA assembly. The first and second antenna element are arranged on the dielectric semiconductor substrate to define between the first and second antenna element a focusing portion (also referred to as feed gap). Moreover, the PCA assembly comprises a femtosecond laser configured to emit laser radiation onto the focusing portion for generating the THz radiation. The focusing portion between the first and second antenna element comprises a plurality of material layers arranged on the semiconductor substrate between the first and second antenna element, comprising a first epsilon-negative, ENG, metamaterial layer adjacent to the first antenna element, an intermediate epsilon-near-zero, ENZ, metamaterial layer, and a second ENG metamaterial layer adjacent to the second antenna element. Thus, a photoconductive antenna, PCA, assembly for generating THz radiation with a higher optical-to-THz conversion efficiency. The PCA assembly according to the first aspect allows a geometrical confinement of electromagnetic waves by increasing the electromagnetic field intensity at the antenna feed due to the metamaterials, which, in turn, increases antenna efficiency.

As will be appreciated, the operation of the PCA assembly according to the first aspect for generating THz radiation is generally based on the effect of ultrafast variations of surface photoconductivity of the semiconductor substrate under laser irradiation generated by the femtosecond laser. Due to the excitation of the material within the focusing portion between the first and second antenna elements by the femtosecond laser the concentration of charge carriers increases sharply for a short period of time in this area and a THz pulse is generated. Because the duration of the generated single short THz pulse is usually about hundreds of femtoseconds, the pulse spectrum usually extends over several octaves in the THz frequency range.

The loading of the PCA assembly according to the first aspect with metamaterials causes significant increment in the electric field intensity at the focusing portion, i.e. the antenna port and as a result helps to increase the output power of the PCA assembly according to the first aspect. Moreover, it helps to break the refraction limit and to reduce the distance between the antenna elements due to a plasmonic behavior of the structure. The compact electrical size helps to increase the number of electrons/holes collected by the antenna elements and to increase the optical-to THz conversion efficiency.

In a further possible implementation form, the intermediate ENZ metamaterial layer comprises a double-positive, DPS, metamaterial layer. This allows increasing the optical-to-THz conversion efficiency even further.

In a further possible implementation form, in a direction extending from the first antenna element through the focusing portion to the second antenna elements the thickness of the intermediate ENZ metamaterial layer is smaller than the thickness of the first ENG metamaterial layer and the second ENG metamaterial layer together. This allows increasing the optical-to-THz conversion efficiency even further.

In a further possible implementation form, the intermediate ENZ metamaterial layer of the PCA assembly extends from the semiconductor substrate to a first height and the first and/or second ENG metamaterial layer extends to a second height that is larger than the first height. This allows increasing the optical-to-THz conversion efficiency even further and requires less of the intermediate ENZ metamaterial.

In a further possible implementation form, the focusing portion further comprises an intermediate ENG metamaterial layer arranged on top of the intermediate ENZ metamaterial layer and between the first and the second ENG metamaterial layer. This allows increasing the optical-to-THz conversion efficiency even further.

In a further possible implementation form, the first and the second ENG metamaterial layer comprises the same ENG metamaterial. This allows manufacturing the PCA assembly in an efficient way.

In a further possible implementation form, the first and the second ENG metamaterial layer are substantially planar layers. This allows manufacturing the PCA assembly in an efficient way.

In a further possible implementation form, the intermediate ENZ metamaterial layer further comprises a graphene layer or a layer of optical conductive material arranged in contact with the first ENG metamaterial layer. This allows increasing the optical-to-THz conversion efficiency even further.

In a further possible implementation form, the intermediate ENZ metamaterial layer further comprises a gold layer or metal layer arranged in contact with the third ENG metamaterial layer. This allows increasing the optical-to-THz conversion efficiency even further.

In a further possible implementation form, the first and/or second antenna element are made of gold and/or graphene. This allows increasing the electron mobility of the first and/or second antenna element and, consequently, the transmission efficiency of the PCA assembly.

In a further possible implementation form, the PCA assembly further comprises a graphene layer or a layer of optical conductive material arranged between the first antenna element and the semiconductor substrate and/or a graphene layer or a layer of optical conductive material arranged between the second antenna element and the semiconductor substrate. This allows increasing the optical-to-THz conversion efficiency even further.

In a further possible implementation form, the first and the second antenna element define an antenna cell of the PCA assembly and wherein further antenna elements of the plurality of antenna elements define one or more further antenna cells of the PCA assembly, wherein the one or more further antenna cells have the same configuration as the antenna cell defined by the first and the second antenna element and wherein at least one of the one or more further antenna cells has a different size than the antenna cell defined by the first and the second antenna element. The arrangement of a plurality of antenna cells on the dielectric semiconductor substrate allows enhancing the bandwidth of the generated THz radiation.

According to a second aspect a method for generating THz radiation with a photoconductive antenna, PCA, assembly is provided. The method comprises the step of emitting laser radiation from a femtosecond laser onto a focusing portion of the PCA assembly, wherein the focusing portion of the PCA assembly is defined between a first and a second antenna element arranged on a dielectric semiconductor substrate. The focusing portion between the first and second antenna element comprises a plurality of material layers arranged on the dielectric semiconductor substrate between the first and second antenna element, comprising a first epsilon-negative, ENG, metamaterial layer adjacent to the first antenna element, an intermediate epsilon-near-zero, ENZ, metamaterial layer, and a second ENG metamaterial layer adjacent to the second antenna element.

The method according to the second aspect of the present disclosure can be performed by the AP according to the first aspect of the present disclosure. Thus, further features of the method, according to the second aspect of the present disclosure, result directly from the functionality of the AP according to the first aspect of the present disclosure as well as its different implementation forms described above and below.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows a schematic perspective view of a PCA assembly according to an embodiment for generating THz radiation;
Figs. 2a and 2b show a schematic cross-sectional side and a top view of the PCA assembly of figure 1;
Figs. 3a and 3b show a perspective view and a schematic cross-sectional side view of the focusing portion of a PCA assembly according to an embodiment;
Figs. 4a and 4b show a perspective view and a schematic cross-sectional side view of the focusing portion of a PCA assembly according to a further embodiment;
Fig. 5 shows a schematic perspective view of a PCA assembly according to a further embodiment for generating THz radiation;
Figs. 6a and 6b show a perspective view and a schematic cross-sectional side view of the focusing portion of the PCA assembly of figure 5;
Fig. 7 shows a schematic perspective view of a PCA assembly according to a further embodiment for generating THz radiation; and
Fig. 8 shows a flow diagram illustrating steps of a method of generating THz radiation according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

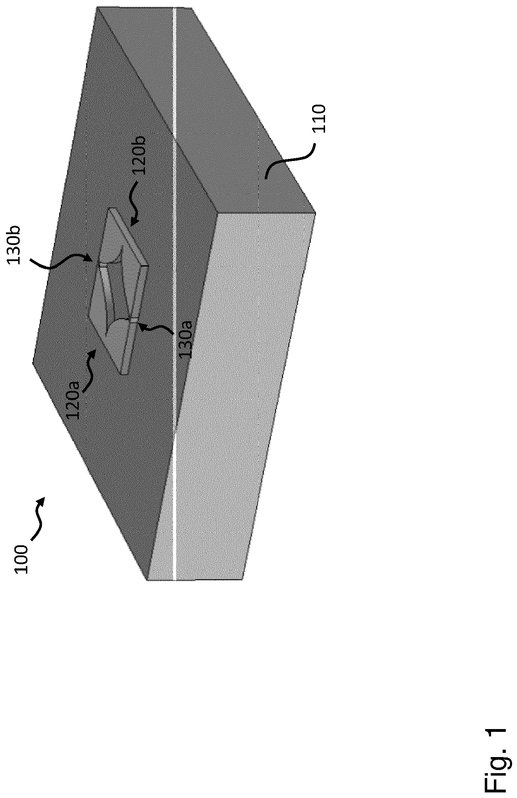

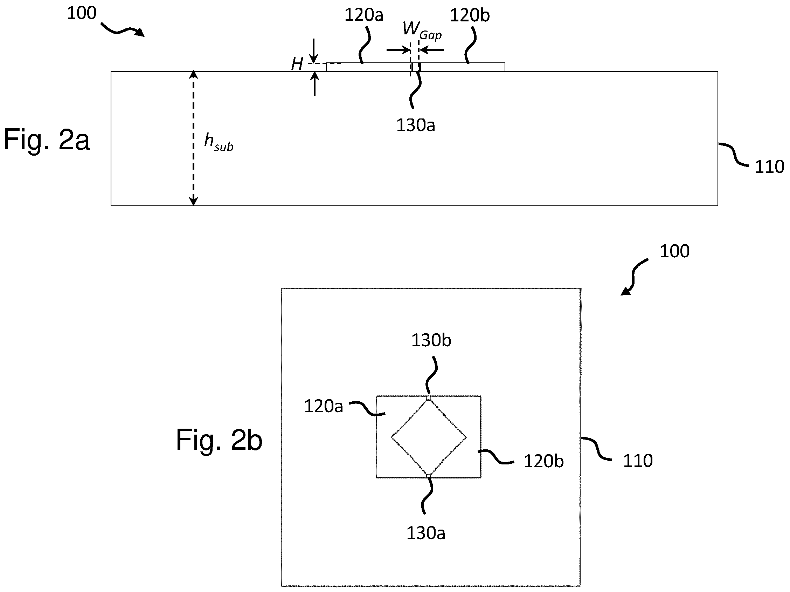

Figure 1 shows a schematic perspective view of a PCA assembly 100 according to an embodiment for generating THz radiation. Figures 2a and 2b show a schematic cross-sectional side and a top view of the PCA assembly 100 of figure 1. The PCA assembly 100 comprises a dielectric semiconductor substrate 110 (which as illustrated in figure 2a may have a height h_{sub}) and a first bow-tie antenna element 120a and a second bow-tie element antenna 120b defining a bow-tie antenna cell of the PCA assembly 100. Although in the embodiment shown in figures 1, 2a,b the first and second antenna element 120a,b are implemented as bow-tie antenna elements 120a,b, in further embodiments the first and second antenna element 120a,b may be based on a different antenna structure. In an embodiment, the first and/or second antenna element 120a,b are made of gold and/or graphene.

The first and second antenna element 120a,b, which may have a height H, are arranged on the dielectric semiconductor substrate 110 to define between the first and second antenna element 120a,b a first focusing portion 130a and a second focusing portion 130b (also referred to as feed gaps 130a,b) with a respective width W_{Gap}. Although in the embodiment shown in figures 1, 2a,b the first and second antenna element 120a,b define two focusing portions 130a,b, in further embodiments the first and second antenna element 120a,b may define one focusing portion or more than two focusing portion. In the following description the first focusing portion 130a will be described in greater detail as a possible implementation of the plurality of focusing portions of the PCA assembly 100. The PCA assembly 100 further comprises a femtosecond laser (not shown in the figures), wherein the femtosecond laser is configured to emit laser radiation onto the one or more focusing portions 130a,b for generating THz radiation.

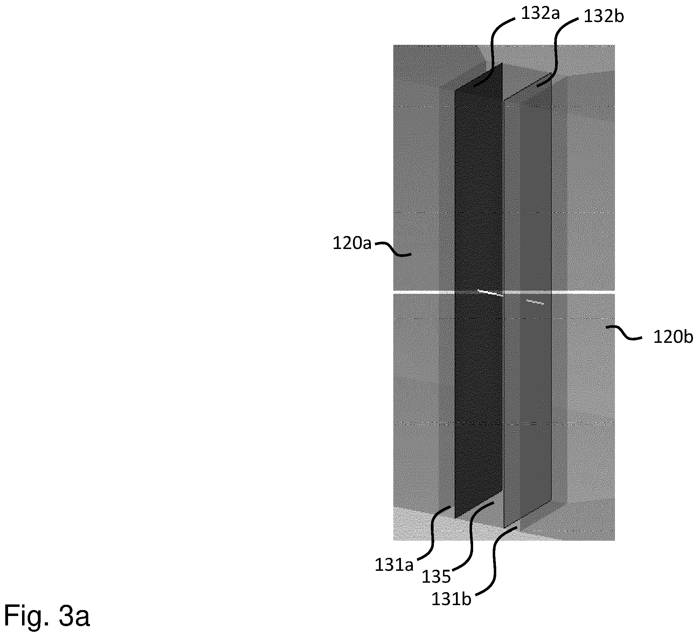

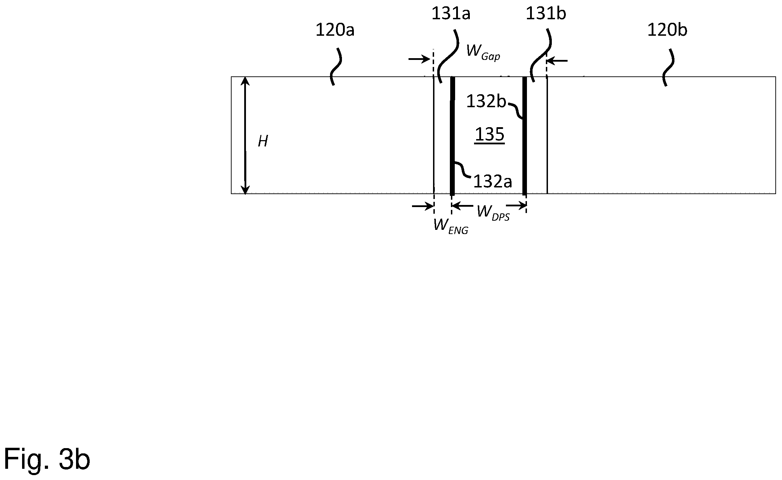

Figures 3a and 3b show a perspective view and a schematic cross-sectional side view of the exemplary focusing portion 130a of the PCA assembly 100 illustrated in figures 1 and 2a,b. The focusing portion 130a between the first and second antenna element 120a,b comprises a plurality of material layers arranged on the semiconductor substrate 110 between the first and second antenna element 120a,b. In the embodiment shown in figures 3a,b the plurality of material layers comprise a first epsilon-negative, ENG, metamaterial layer 131a adjacent to, in particular in contact with the first antenna element 120a, an intermediate epsilon-near-zero, ENZ, metamaterial layer, and a second ENG metamaterial layer 131b adjacent to, in particular in contact with the second antenna element 120b. According to an embodiment, in a direction extending from the first antenna element 120a through the focusing portion 130a to the second antenna element 120b the thickness of the intermediate ENZ metamaterial layer is smaller than the thickness of the sum of the first ENG metamaterial layer 131a and the second ENG metamaterial layer 131b together.

In the embodiment shown in figures 3a and 3b the intermediate epsilon-near-zero, ENZ, metamaterial layer comprises a central a double-positive, DPS, metamaterial layer 135 and a graphene layer 132a (or a layer 132a made of an optical conductive material) arranged in contact with the first ENG metamaterial layer 131a and a gold layer 132b (or a different metal layer 132b) arranged in contact with the second ENG metamaterial layer 131b. Loading the focusing portion 130a with the ENZ metamaterial layer with *εᵣ* ≈ 0 and *µᵣ* > 0 allows increase the field intensity in this region. As will be appreciated, the first and second ENG metamaterial layers 131a,b have the physical properties *εᵣ* < 0 and *µᵣ* > 0 and the DPS metamaterial layer 135 has the physical properties *εᵣ* > 0 and *µᵣ* > 0. Further details about the metamaterials implemented by the PCA assembly 100 may be found, for instance, in Cai W, Shalaev VM, "Optical metamaterials". New York: Springer; 2010 and Cui TJ, Smith DR, Liu R, "Metamaterials". Boston, MA, USA, Springer; 2010, which are fully incorporated by reference herein.

As will be appreciated, the operation of the PCA assembly 100 for generating THz radiation is generally based on the effect of ultrafast variations of surface photoconductivity of the semiconductor substrate 110 under laser irradiation generated by the femtosecond laser. Due to the excitation of the material within the focusing portion 130a between the first and second antenna elements 120a,b by the femtosecond laser the concentration of charge carriers increases sharply for a short period of time in this area and a THz pulse is generated. Because the duration of the generated single short THz pulse is usually about hundreds of femtoseconds, the pulse spectrum usually extends over several octaves in the THz frequency range. The PCA assembly 100 disclosed herein allows a geometrical confinement of the electromagnetic waves by increasing the electromagnetic field intensity at the antenna feed due to the metamaterials, which, in turn, increases antenna efficiency.

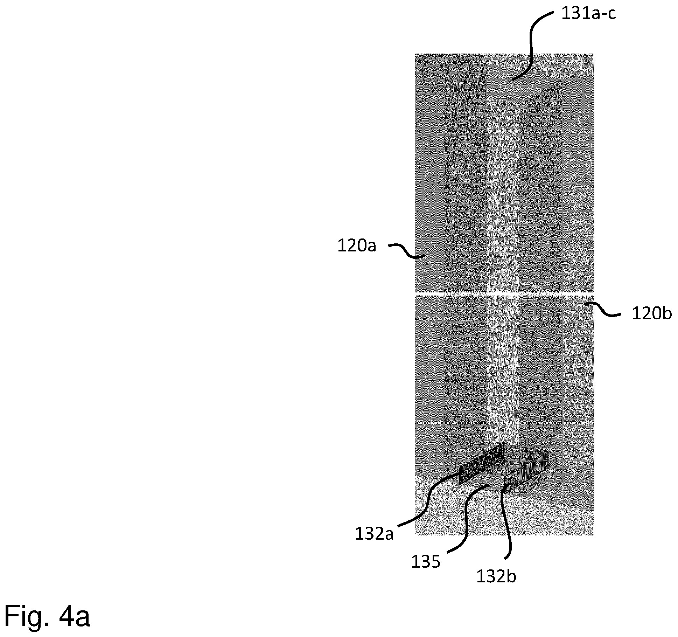

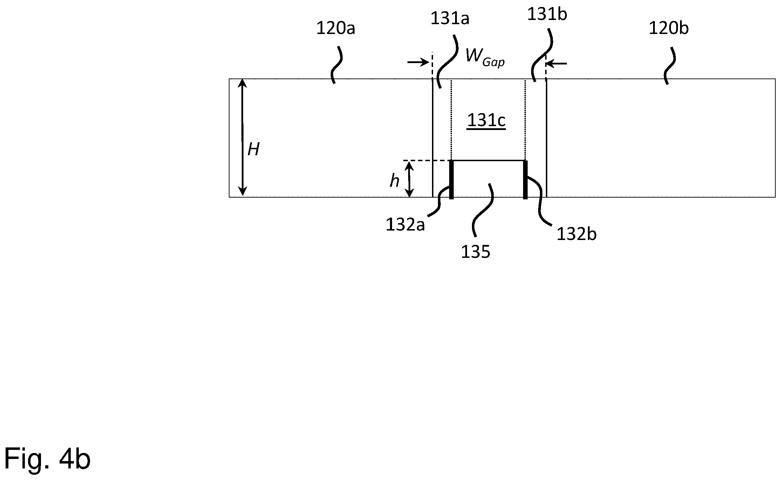

Figures 4a and 4b show a perspective view and a schematic cross-sectional side view of the exemplary focusing portion 130a of the PCA assembly 100 according to a further embodiment. In the embodiment of the PCA assembly 100 shown in figures 4a and 4b the ENZ metamaterial layer, including the DPS metamaterial layer 135, the graphene layer 132a (or the layer 132a made of an optical conductive material) and the gold layer 132b (or the different metal layer 132b) extend to a lesser height that in the previous embodiment. In other words, in the embodiment shown in figures 4a and 4b the intermediate ENZ metamaterial layer extends from the semiconductor substrate 110 to the first height h, while the first and second ENG metamaterial layer 131a,b extends to the larger second height H. In the embodiment shown in figures 4a and 4b, the focusing portion 130a further comprises an intermediate ENG metamaterial layer 131c arranged on top of the intermediate ENZ metamaterial layer and between the first and the second ENG metamaterial layer 131a,b. In an embodiment, the first and the second ENG metamaterial layer 131a,b and the an intermediate ENG metamaterial layer 131c may be provided by a single ENG metamaterial layer 131a-c. The reduced height of the ENZ metamaterial layer according to the embodiment shown in figures 4a,b leads to an even more efficient electromagnetic field focusing with a more uniform behaviour. Moreover, plasmonic modes may be excited, which further increasing the focussing properties.

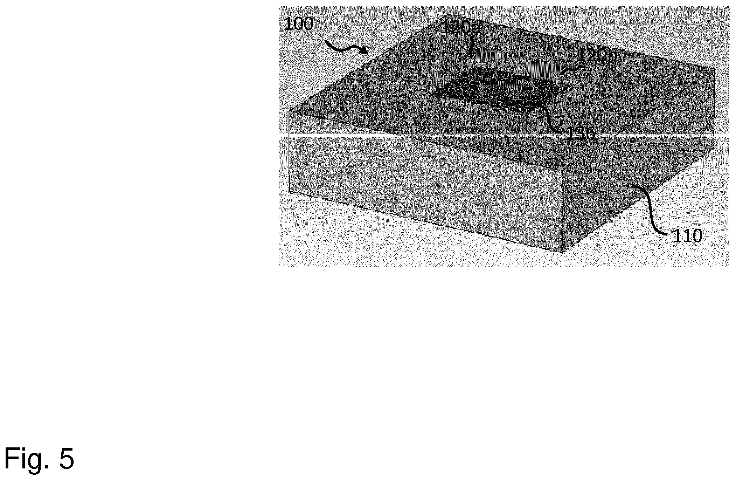

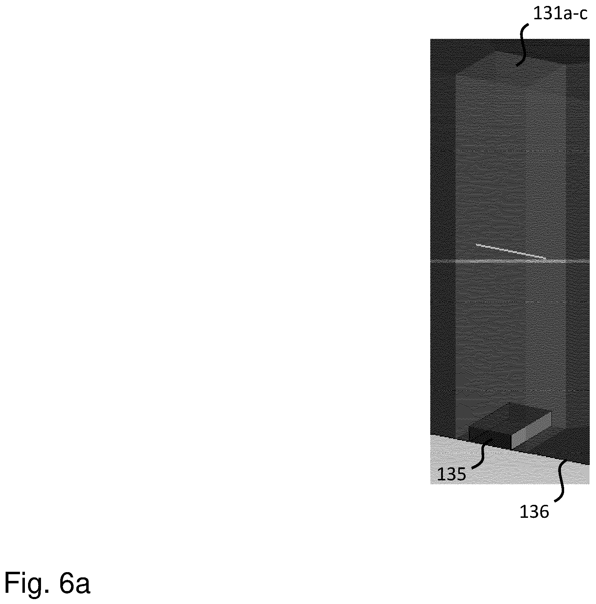

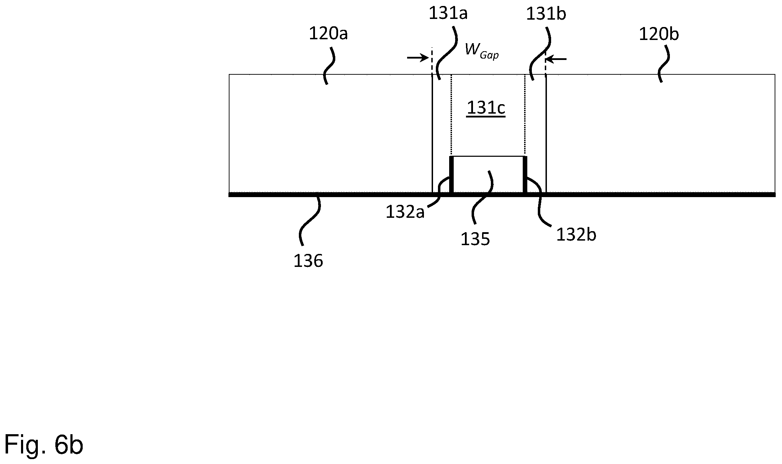

Figure 5 shows a schematic perspective view of the PCA assembly 100 according to a further embodiment for generating THz radiation. Figures 6a and 6b show a perspective view and a schematic cross-sectional side view of the focusing portion of the PCA assembly 100 of figure 5. The PCA assembly 100 shown in figures 5, 6a,b is a variant of the previous embodiment of the PCA assembly 100 (shown in figures 4a,b). In the embodiment shown in figures 5, 6a,b the PCA assembly 100 further comprises a graphene layer 136 (or a layer 136 of optical conductive material) arranged between the first and/or second antenna element 120a,b and the focusing portion 130a on one side and the semiconductor substrate 110 on the other side.

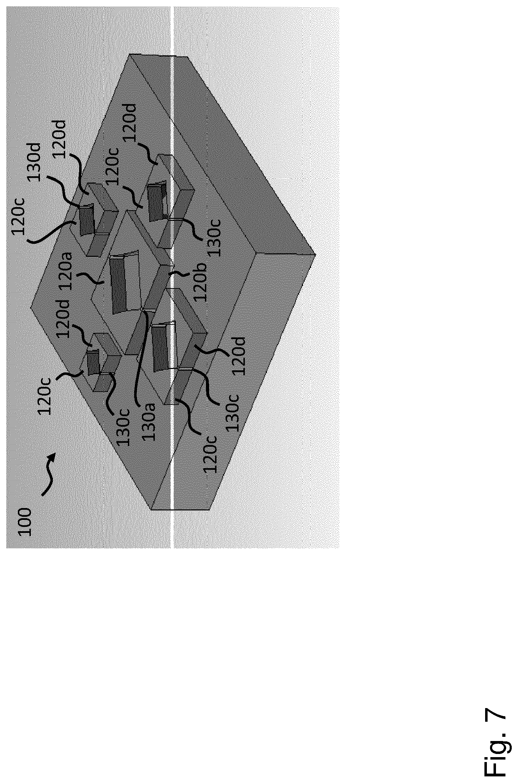

Figure 7 shows a schematic perspective view of the PCA assembly 100 according to a further embodiment for generating THz radiation. Different to the single antenna cell defined by the PCA assembly 100 according to the previous embodiments, the PCA assembly 100 according to the embodiment shown in figure 7 comprises a plurality of antenna elements 120a-d defining a plurality of antenna cells, which may have different sizes. By way of example, the antenna elements 120a,b define a first central antenna cell, while a plurality of further antenna elements 120c,d define four further antenna cell arranged around the first central antenna cell. Other than the different sizes of the antenna cells, these cells may function in the same way, i.e. have the same configuration as described for the embodiments above. The arrangement of a plurality of antenna cells on the dielectric semiconductor substrate 110 allows enhancing the bandwidth of the generated THz radiation.

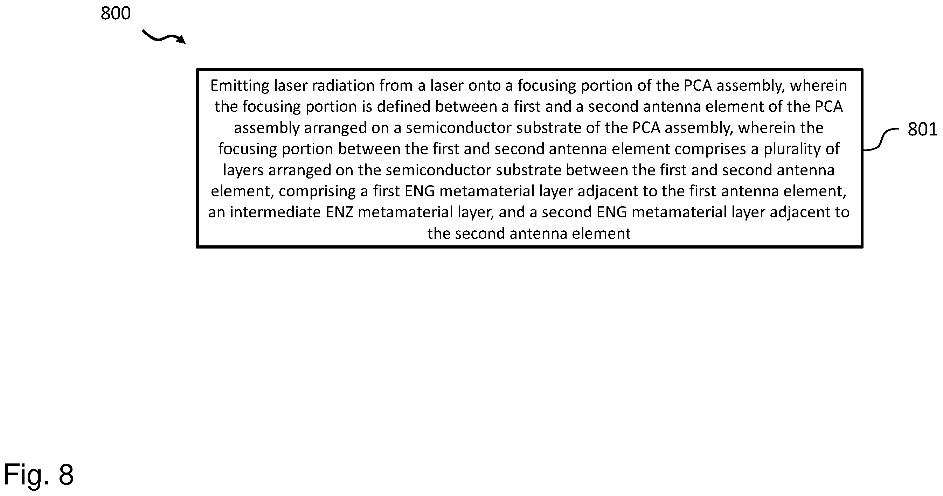

Figure 8 is a flow diagram illustrating a method 800 for generating THz radiation with a PCA assembly, in particular the PCA assembly 100 described above. The method 800 comprises a step 801 of emitting laser radiation from the femtosecond laser of the PCA assembly 100 onto the focusing portion 130a of the PCA assembly 100, wherein the focusing portion 130a is defined between the first and the second antenna element 120a,b of the PCA assembly 100 arranged on the semiconductor substrate 110 of the PCA assembly 100. As already described above, the focusing portion 130a between the first and second antenna element 120a,b comprises a plurality of layers arranged on the semiconductor substrate 110 between the first and second antenna element 120a,b, comprising a first epsilon-negative, ENG, metamaterial layer 131a adjacent to the first antenna element 120a, an intermediate epsilon-near-zero, ENZ, metamaterial layer, and a second ENG metamaterial layer 131b adjacent to the second antenna element 120b.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A photoconductive antenna, PCA, assembly (100) for generating THz radiation, the PCA assembly (100) comprising:
a semiconductor substrate (110);
a plurality of antenna elements (120a-d), including a first antenna element (120a) and a second antenna element (120b), wherein the first and second antenna element (120a,b) are arranged on the semiconductor substrate (110) to define between the first and second antenna element (120a,b) a focusing portion (130a,b); and
a laser configured to emit laser radiation onto the focusing portion (130a,b);
**characterized in that** the focusing portion (130a,b) between the first and second antenna element (120a,b) comprises a plurality of layers arranged on the semiconductor substrate (110) between the first and second antenna element (120a,b), comprising a first epsilon-negative, ENG, metamaterial layer (131a) adjacent to the first antenna element (120a), an intermediate epsilon-near-zero, ENZ, metamaterial layer, and a second ENG metamaterial layer (131b) adjacent to the second antenna element (120b).

2. The PCA assembly (100) of claim 1, wherein the intermediate ENZ metamaterial layer comprises a double-positive, DPS, metamaterial layer (135).

3. The PCA assembly (100) of claim 1, wherein in a direction extending from the first antenna element (120a) through the focusing portion (130a,b) to the second antenna element (120b) the thickness of the intermediate ENZ metamaterial layer is smaller than the thickness of the first ENG metamaterial layer (131a) and the second ENG metamaterial layer (131b) together.

4. The PCA assembly (100) of any one of claims 1 to 3, wherein the intermediate ENZ metamaterial layer extends from the semiconductor substrate (110) to a first height (h) and wherein the first and/or second ENG metamaterial layer (131a,b) extends to a second height (H) that is larger than the first height (h).

5. The PCA assembly (100) of claim 4, wherein the focusing portion (130a,b) further comprises an intermediate ENG metamaterial layer (131c) arranged on top of the intermediate ENZ metamaterial layer and between the first and the second ENG metamaterial layer (131a,b).

6. The PCA assembly (100) of any one of claims 1 to 5, wherein the first and the second ENG metamaterial layer (131a,b) comprises the same ENG metamaterial.

7. The PCA assembly (100) of any one of claims 1 to 6, wherein the first and the second ENG metamaterial layer (131a,b) are substantially planar layers.

8. The PCA assembly (100) of any one of claims 1 to 7, wherein the ENZ metamaterial layer further comprises a graphene layer (132a) or a layer (132a) of optical conductive material arranged in contact with the first ENG metamaterial layer (131a).

9. The PCA assembly (100) of any one of claims 1 to 8, wherein the ENZ metamaterial layer further comprises a gold layer (132b) or metal layer (132b) arranged in contact with the second ENG metamaterial layer (131b).

10. The PCA assembly (100) of any one of claims 1 to 9, wherein the first and/or second antenna element (120a,b) are made of gold and/or graphene.

11. The PCA assembly (100) of any one of claims 1 to 10, wherein the PCA assembly (100) further comprises a graphene layer (136) or a layer (136) of optical conductive material arranged between the first antenna element (120a) and the semiconductor substrate (110) and/or a graphene layer (136) or a layer (136) of optical conductive material arranged between the second antenna element (120b) and the semiconductor substrate (110).

12. The PCA assembly (100) of any one of claims 1 to 11, wherein the first and the second antenna element (120a,b) define an antenna cell of the PCA assembly (100) and wherein further antenna elements (120c-d) of the plurality of antenna elements define one or more further antenna cells of the PCA assembly (100), wherein the one or more further antenna cells have the same configuration as the antenna cell defined by the first and the second antenna element (120a,b) and wherein at least one of the one or more further antenna cells has a different size than the antenna cell defined by the first and the second antenna element (120a,b).

13. A method (800) for generating THz radiation with a photoconductive antenna, PCA, assembly (100), the method (800) comprising:
emitting (801) laser radiation from a laser onto a focusing portion (130) of the PCA assembly (100), wherein the focusing portion (130) is defined between a first and a second antenna element (120a,b) of the PCA assembly (100) arranged on a semiconductor substrate (110) of the PCA assembly (100);
wherein the focusing portion (130) between the first and second antenna element (120a,b) comprises a plurality of layers arranged on the semiconductor substrate (110) between the first and second antenna element (120a,b), comprising a first epsilon-negative, ENG, metamaterial layer (131a) adjacent to the first antenna element (120a), an intermediate epsilon-near-zero, ENZ, metamaterial layer, and a second ENG metamaterial layer (131b) adjacent to the second antenna element (120b).

## Patentansprüche

1. Fotoleitantennenanordnung, PCA-Anordnung, (100) zum Erzeugen von THz-Strahlung, wobei die PCA-Anordnung (100) Folgendes umfasst:
ein Halbleitersubstrat (110);
mehrere Antennenelemente (120a-d), die ein erstes Antennenelement (120a) und ein zweites Antennenelement (120b) enthalten, wobei das erste und das zweite Antennenelement (120a,b) auf dem Halbleitersubstrat (110) angeordnet sind, um zwischen dem ersten und dem zweiten Antennenelement (120a,b) einen Fokussierabschnitt (130a,b) zu definieren; und
einen Laser, der konfiguriert ist, Laserstrahlung auf den Fokussierabschnitt (130a,b) abzustrahlen;
**dadurch gekennzeichnet, dass** der Fokussierabschnitt (130a,b) zwischen dem ersten und dem zweiten Antennenelement (120a,b) mehrere Schichten umfasst, die auf dem Halbleitersubstrat (110) zwischen dem ersten und dem zweiten Antennenelement (120a,b) angeordnet sind und eine erste Epsilon-Negativ-Metamaterialschicht, ENG-Metamaterialschicht, (131a), die zum ersten Antennenelement (120a) benachbart ist, eine zwischenliegende Epsilon-Nahe-Null-Metamaterialschicht, ENZ-Metamaterialschicht, und eine zweite ENG-Metamaterialschicht (131b), die zum zweiten Antennenelement (120b) benachbart ist, umfassen.

2. PCA-Anordnung (100) nach Anspruch 1, wobei die Zwischen-ENZ-Metamaterialschicht eine Doppel-Positiv-Metamaterialschicht, DPS-Metamaterialschicht, (135) umfasst.

3. PCA-Anordnung (100) nach Anspruch 1, wobei in einer Richtung, die vom ersten Antennenelement (120a) durch den Fokussierabschnitt (130a,b) zum zweiten Antennenelement (120b) verläuft, die Dicke der Zwischen-ENZ-Metamaterialschicht kleiner als die Dicke der ersten ENG-Metamaterialschicht (131a) und der zweiten ENG-Metamaterialschicht (131b) zusammen ist.

4. PCA-Anordnung (100) nach einem der Ansprüche 1 bis 3, wobei die Zwischen-ENZ-Metamaterialschicht vom Halbleitersubstrat (110) zu einer ersten Höhe (h) verläuft und die erste und/oder die zweite ENG-Metamaterialschicht (131a,b) zu einer zweiten Höhe (H) verläuft, die größer als die erste Höhe (h) ist.

5. PCA-Anordnung (100) nach Anspruch 4, wobei der Fokussierabschnitt (130a,b) ferner eine Zwischen-ENG-Metamaterialschicht (131c) umfasst, die auf der Zwischen-ENZ-Metamaterialschicht und zwischen der ersten und der zweiten ENG-Metamaterialschicht (131a,b) angeordnet ist.

6. PCA-Anordnung (100) nach einem der Ansprüche 1 bis 5, wobei die erste und die zweite ENG-Metamaterialschicht (131a,b) dasselbe ENG-Metamaterial umfassen.

7. PCA-Anordnung (100) nach einem der Ansprüche 1 bis 6, wobei die erste und die zweite ENG-Metamaterialschicht (131a,b) im Wesentlichen ebene Schichten sind.

8. PCA-Anordnung (100) nach einem der Ansprüche 1 bis 7, wobei die ENZ-Metamaterialschicht ferner eine Graphenschicht (132a) oder eine Schicht (132a) eines Materials eines optischen Leiters umfasst, die mit der ersten ENG-Metamaterialschicht (131a) in Kontakt angeordnet ist.

9. PCA-Anordnung (100) nach einem der Ansprüche 1 bis 8, wobei die ENZ-Metamaterialschicht ferner eine Goldschicht (132b) oder eine Metallschicht (132b), die mit der zweiten ENG-Metamaterialschicht (131b) in Kontakt angeordnet ist, umfasst.

10. PCA-Anordnung (100) nach einem der Ansprüche 1 bis 9, wobei das erste und/oder das zweite Antennenelement (120a,b) aus Gold und/oder Graphen hergestellt sind.

11. PCA-Anordnung (100) nach einem der Ansprüche 1 bis 10, wobei die PCA-Anordnung (100) ferner eine Graphenschicht (136) oder eine Schicht (136) eines Materials eines optischen Leiters, die zwischen dem ersten Antennenelement (120a) und dem Halbleitersubstrat (110) angeordnet ist, und/oder eine Graphenschicht (136) oder eine Schicht (136) eines Materials eines optischen Leiters, die zwischen dem zweiten Antennenelement (120b) und dem Halbleitersubstrat (110) angeordnet ist, umfasst.

12. PCA-Anordnung (100) nach einem der Ansprüche 1 bis 11, wobei das erste und das zweite Antennenelement (120a,b) eine Antennenzelle der PCA-Anordnung (100) definieren und weitere Antennenelemente (120c-d) der mehreren Antennenelemente eine oder mehrere weitere Antennenzellen der PCA-Anordnung (100) definieren, die eine oder mehreren weiteren Antennenzellen dieselbe Konfiguration wie die Antennenzelle aufweisen, die durch das erste und das zweite Antennenelement (120a,b) definiert ist, und mindestens eine der einen oder der mehreren weiteren Antennenzellen eine von der Antennenzelle, die durch das erste und das zweite Antennenelement (120a,b) definiert ist, verschiedene Größe aufweist.

13. Verfahren (800) zum Erzeugen von THz-Strahlung mit einer Fotoleitantennenanordnung, PCA-Anordnung (100), wobei das Verfahren (800) Folgendes umfasst:
Abstrahlen (801) einer Laserstrahlung von einem Laser auf einen Fokussierabschnitt (130) der PCA-Anordnung (100), wobei der Fokussierabschnitt (130) zwischen einem ersten und einem zweiten Antennenelement (120a,b) der PCA-Anordnung (100) definiert ist, die auf einem Halbleitersubstrat (110) der PCA-Anordnung (100) angeordnet ist;
wobei der Fokussierabschnitt (130) zwischen dem ersten und dem zweiten Antennenelement (120a,b) mehrere Schichten umfasst, die auf dem Halbleitersubstrat (110) zwischen dem ersten und dem zweiten Antennenelement (120a,b) angeordnet sind und eine erste Epsilon-Negativ-Metamaterialschicht, ENG-Metamaterialschicht, (131a), die zum ersten Antennenelement (120a) benachbart ist, ein zwischenliegende Epsilon-Nahe-Null-Metamaterialschicht, ENZ-Metamaterialschicht, und eine zweite ENG-Metamaterialschicht (131b), die zum zweiten Antennenelement (120b) benachbart ist, umfassen.

## Revendications

1. Ensemble antenne photoconductrice, PCA, (100) pour générer un rayonnement THz, l'ensemble PCA (100) comprenant :
un substrat semi-conducteur (110) ;
une pluralité d'éléments d'antenne (120a-d), comportant un premier élément d'antenne (120a) et un deuxième élément d'antenne (120b), le premier et le deuxième élément d'antenne (120a,b) étant agencés sur le substrat semi-conducteur (110) pour définir, entre le premier et le deuxième élément d'antenne (120a,b), une partie de focalisation (130a,b) ; et
un laser configuré pour émettre un rayonnement laser sur la partie de focalisation (130a,b) ;
**caractérisé en ce que** la partie de focalisation (130a,b) entre le premier et le deuxième élément d'antenne (120a,b) comprend une pluralité de couches agencées sur le substrat semi-conducteur (110) entre le premier et le deuxième élément d'antenne (120a,b), comprenant une première couche de métamatériau à epsilon négatif, ENG, (131a) adjacente au premier élément d'antenne (120a), une couche intermédiaire de métamatériau à epsilon proche de zéro, ENZ, et une deuxième couche de métamatériau à ENG (131b) adjacente au deuxième élément d'antenne (120b).

2. Ensemble PCA (100) selon la revendication 1, dans lequel la couche intermédiaire de métamatériau à ENZ comprend une couche de métamatériau doublement positif, DPS, (135).

3. Ensemble PCA (100) selon la revendication 1, dans lequel, dans une direction s'étendant du premier élément d'antenne (120a) à travers la partie de focalisation (130a,b) jusqu'au deuxième élément d'antenne (120b), l'épaisseur de la couche intermédiaire de métamatériau à ENZ est inférieure à l'épaisseur de l'ensemble formé par la première couche de métamatériau à ENG (131a) et la deuxième couche de métamatériau à ENG (131b).

4. Ensemble PCA (100) selon l'une quelconque des revendications 1 à 3, dans lequel la couche intermédiaire de métamatériau à ENZ s'étend du substrat semi-conducteur (110) jusqu'à une première hauteur (h) et dans lequel la première et/ou la deuxième couche de métamatériau à ENG (131a,b) s'étendent jusqu'à une deuxième hauteur (H) supérieure à la première hauteur (h).

5. Ensemble PCA (100) selon la revendication 4, dans lequel la partie de focalisation (130a,b) comprend en outre une couche intermédiaire de métamatériau à ENG (131c) agencée par-dessus la couche intermédiaire de métamatériau à ENZ et entre la première et la deuxième couche de métamatériau à ENG (131a,b).

6. Ensemble PCA (100) selon l'une quelconque des revendications 1 à 5, dans lequel la première et la deuxième couche de métamatériau à ENG (131a,b) comprennent le même métamatériau à ENG.

7. Ensemble PCA (100) selon l'une quelconque des revendications 1 à 6, dans lequel la première et la deuxième couche de métamatériau à ENG (131a,b) sont des couches sensiblement planes.

8. Ensemble PCA (100) selon l'une quelconque des revendications 1 à 7, dans lequel la couche de métamatériau à ENZ comprend en outre une couche de graphène (132a) ou une couche (132a) de matériau conducteur optique agencée en contact avec la première couche de métamatériau à ENG (131a).

9. Ensemble PCA (100) selon l'une quelconque des revendications 1 à 8, dans lequel la couche de métamatériau à ENZ comprend en outre une couche d'or (132b) ou une couche métallique (132b) agencée en contact avec la deuxième couche de métamatériau à ENG (131b).

10. Ensemble PCA (100) selon l'une quelconque des revendications 1 à 9, dans lequel le premier et/ou le deuxième élément d'antenne (120a,b) sont en or et/ou en graphène.

11. Ensemble PCA (100) selon l'une quelconque des revendications 1 à 10, l'ensemble PCA (100) comprenant en outre une couche de graphène (136) ou une couche (136) de matériau conducteur optique agencée entre le premier élément d'antenne (120a) et le substrat semi-conducteur (110) et/ou une couche de graphène (136) ou une couche (136) de matériau conducteur optique agencée entre le deuxième élément d'antenne (120b) et le substrat semi-conducteur (110).

12. Ensemble PCA (100) selon l'une quelconque des revendications 1 à 11, dans lequel le premier et le deuxième élément d'antenne (120a,b) définissent une cellule d'antenne de l'ensemble PCA (100) et dans lequel d'autres éléments d'antenne (120c-d) de la pluralité d'éléments d'antenne définissent une ou plusieurs autres cellules d'antenne de l'ensemble PCA (100), la ou les autres cellules d'antenne présentant la même configuration que celle de la cellule d'antenne définie par le premier et le deuxième élément d'antenne (120a,b) et au moins une de la ou des autres cellules d'antenne présentant une taille différente de celle de la cellule d'antenne définie par le premier et le deuxième élément d'antenne (120a,b).

13. Procédé (800) de génération d'un rayonnement THz au moyen d'un ensemble antenne photoconductrice, PCA, (100), le procédé (800) comprenant :
l'émission (801) d'un rayonnement laser à partir d'un laser sur une partie de focalisation (130) de l'ensemble PCA (100), la partie de focalisation (130) étant définie entre un premier et un deuxième élément d'antenne (120a,b) de l'ensemble PCA (100) agencés sur un substrat semi-conducteur (110) de l'ensemble PCA (100) ;
la partie de focalisation (130) entre le premier et le deuxième élément d'antenne (120a,b) comprenant une pluralité de couches agencées sur le substrat semi-conducteur (110) entre le premier et le deuxième élément d'antenne (120a,b), comprenant une première couche de métamatériau à epsilon négatif, ENG, (131a) adjacente au premier élément d'antenne (120a), une couche intermédiaire de métamatériau à epsilon proche de zéro, ENZ, et une deuxième couche de métamatériau à ENG (131b) adjacente au deuxième élément d'antenne (120b).
